# EUROPEAN PATENT APPLICATION

(11) **EP 2 713 525 A1**
(43) Date of publication of application: **02.04.2014**
(21) Application number: 12360070.2
(22) Date of filing: 27.09.2012
(51) Int. Cl.: H04B 7/02

(54) **Radio link synchronization**

(71) Applicant: Alcatel Lucent, 75007 Paris (FR)
(72) Inventor: Wong, Shin Horng, Chippenham, Wiltshire SN14 0SP (GB)
(74) Representative: Leppard, Andrew John

(57) **Abstract**

A user equipment method, user equipment, a network node method, a network node and computer program products are disclosed. The user equipment method comprises: receiving a serving cell radio link and at least one assisting serving cell radio link transmitted on a shared frequency; determining whether an out of synchronisation condition is met for each of the serving cell radio link and the at least one assisting serving cell radio link; and when it is determined that at least one of the out of synchronisation conditions are met, providing an indication of which of the serving cell radio link and the at least one assisting serving cell radio link is out of synchronisation. Unlike in the previous approaches where an out-of-synchronization indication is only provided when the serving cell is out of synchronization or where an indication is only provided when both the serving cell and the assisting serving cell radio links are out of synchronization, this approach enables an indication to be provided when any one of the radio links is out of synchronization. This enables ameliorative action to be taken when just one of the radio links is out of synchronization, which may enable the user equipment to remain in the cell_DCH state and avoid losing its high speed channels and exit multi-flow HSDPA operation.

## Description

### FIELD OF THE INVENTION

The present invention relates to a user equipment method, user equipment, a network node method, a network node and computer program products.

### BACKGROUND

Single carrier wireless telecommunications systems are known. In those known systems, radio coverage is provided to user equipment, for example mobile telephones, by geographical area. A base station is located in each geographical area to provide the required radio coverage. User equipment in the area or cell served by a base station receives information and data from the base station and transmits information and data to the base station. In a High-Speed Downlink Packet Access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers. Hence, in addition to HS-DPA in the downlink, High Speed Uplink Packet Access (HS-UPA) is also provided in the uplink.

In known wireless telecommunications systems operating in a single carrier mode, user equipment can move between cells. Service provided to user equipment is overseen by a Radio Network Controller (RNC). The RNC communicates with user equipment and base stations and determines which cell each user equipment is primarily connected to. Furthermore, the RNC acts to control and communicate with a base station and user equipment when user equipment moves from a cell served by one base station to a cell served by another base station.

Multi-point or multi-flow transmission for HSDPA (MP-HSDPA), where user equipment receives HSDPA transmissions from more than one cell belonging to different base stations, is possible. These MP-HSDPA transmissions can occur on carriers having the same frequency and they can be of different High Speed Downlink Shared Channel (HS-DSCH) streams.

The provision of the multi-point or multi-flow functionality discussed above may have associated problems. Accordingly, it is desired to improve the operation of a wireless telecommunications network.

### SUMMARY

According to a first aspect, there is provided a user equipment method, comprising: receiving a serving cell radio link and at least one assisting serving cell radio link transmitted on a shared frequency; determining whether an out of synchronisation condition is met for each of the serving cell radio link and the at least one assisting serving cell radio link; and when it is determined that at least one of the out of synchronisation conditions are met, providing an indication of which of the serving cell radio link and the at least one assisting serving cell radio link is out of synchronisation.

The first aspect recognises that a problem with multi-flow HSDPA is that data may continue to be transmitted between the network and the user equipment on a downlink radio link even when the quality of that downlink radio link is poor and those transmissions may not be received by the user equipment. This is because the network may be unable to determine whether a particular downlink radio link is experiencing poor performance such that the user equipment is unable to receive transmissions over that radio link. In particular, in multi-flow (or multi-point) HSDPA, user equipment receives two or more independent HSDPA streams from different cells. These cells may be provided by the same or different base stations. The cell that the user equipment is primarily attached to is referred to as the serving cell, whilst the other cells that provide HSDPA streams to the user equipment are known as assisting serving cells. Typically, the user equipment monitors the downlink radio link quality and detects possible failure. One approach is that the user equipment monitors the quality of the downlink Dedicated Physical Control Channel (DPCCH) or the fractional Dedicated Physical Channel (F-DPCH) and, if its quality over the preceding 40ms exceeds a threshold, then it is considered to be in synchronization and the user equipment sends a CPHY-SYN-IND primitive from the physical layer to the Radio Resource Connection (RRC) layer. If the quality of the DPCCH or F-DPCH over the preceding 160ms is beneath a threshold, then the radio link is considered to be out of synchronization and the user equipment sends a CPHY-out-of-sync-IND from the physical layer to the RRC layer. At the RRC layer the user equipment counts the number of consecutive CPHY-out-of-sync-IND primitives and, if it is above a threshold, a timer is started. The timer is stopped and reset if the RRC layer receives a number of consecutive CPHY-SYN-IND primitives from the physical layer. When the timer expires (typically after 3 seconds) the user equipment declares a radio link failure. When a radio link failure is declared, the user equipment will exit the cell_DCH state, thereby losing its high-speed channels. Since multi-flow HSDPA operates only in the cell_DCH state, user equipment declaring a radio link failure will also exit multi-flow HSDPA operation.

In a multi-carrier system such as, for example, 4 cell-HSDPA, when a radio link failure occurs on the primary carrier, the user equipment will exit the cell_DCH state, even if the secondary carriers are in good radio condition. In multi-flow HSDPA, the user equipment will likely experience different downlink radio quality from each of its serving cells even though they are on the same frequency. Since the user equipment in multi-flow HSDPA has multiple radio links, radio link failure need not be declared if only the serving cell has a radio link failure but, rather, radio link failure may be declared only if both the serving cell and the assisting serving cell radio links are all out of synchronization. This would be achieved by only sending the primitive CPHY-out-of-sync-IND if the quality of the F-DPCH of the serving cells and the assisting serving cells fail to meet the quality criteria. Although this helps to improve the robustness of the downlink radio link, such an approach makes it no longer possible to determine at the network whether the quality of one of the downlink radio links is poor, which may lead to the network continuing to transmit data to the user equipment and assuming that that data is received successfully, even though this may not be the case. Furthermore, the network may assume that important control information is also being received by the user equipment even though the properties of the radio link over which that information is transmitted are poor.

Accordingly, a method is provided. The method may comprise receiving a radio link from a serving cell and receiving a radio link from at least one assisting serving cell. Each of the radio links may be transmitted on a shared, the same or a common frequency. The method may also comprise determining whether an out-of-synchronization condition is met for each of the received radio links. The method may also comprise that in the event that it is determined that an out-of-synchronization condition occurs, an indication is provided which indicates which of the received radio links are out of synchronization. Accordingly, unlike in the previous approaches where an out-of-synchronization indication is only provided when the serving cell is out of synchronization or where an indication is only provided when both the serving cell and the assisting serving cell radio links are out of synchronization, this approach enables an indication to be provided when any one of the radio links is out of synchronization. This enables ameliorative action to be taken when just one of the radio links is out of synchronization, which may enable the user equipment to remain in the cell_DCH state and avoid losing its high speed channels and exit multi-flow HSDPA operation.

In one embodiment, the step of providing comprises transmitting a primitive indicating a synchronisation state for each of the serving cell radio link and the at least one assisting serving cell radio link. Accordingly, the indication may comprise a primitive. The primitive may indicate the synchronization state of each radio link. It will be appreciated that it is possible to determine the synchronization state of each of the radio links from this primitive.

In one embodiment, the step of providing comprises transmitting a primitive for each of the serving cell radio link and the at least one assisting serving cell radio link, each primitive indicating an associated one of a synchronised and out of synchronisation condition for that radio link. Accordingly, a primitive may be transmitted for each of the radio links and may indicate whether that radio link is in a synchronized or an out-of-synchronized condition.

In one embodiment, the method comprises the step of: when it is determined that the out of synchronisation condition is met, transmitting a message to at least one of the serving cell and the at least one assisting serving cell indicating which radio link is in the out of synchronisation condition. Accordingly, on the occurrence of an out-of-synchronization condition being met, a message may be transmitted indicating which radio link is in the out-of-synchronization condition. This message may then be received by those cells capable of receiving this message.

In one embodiment, the method comprises the step of: when it is determined that the out of synchronisation condition is met, determining whether a radio link failure condition for that radio link has been met and, if so, transmitting a primitive indicating which of the serving cell radio link and the at least one assisting serving cell radio link has exhibited the radio link failure condition. Accordingly, for those radio links which are determined to be out of synchronization, a further determination may be made of whether a radio link failure has also occurred. If a radio link failure has occurred, then a primitive may be transmitted which indicates which radio link has failed.

In one embodiment, wherein the primitive is transmitted between a physical layer and an upper layer. It will be appreciated that the upper layer may be a radio resource connection layer.

In one embodiment, the method comprises the step of: when it is determined that the radio link failure condition is met, transmitting a message to at least one of the serving cell and the at least one assisting serving cell indicating which radio link has exhibited the radio link failure condition. Accordingly, should a radio link failure occur, then a message may be transmitted which indicates the radio link on which the radio link failure has occurred.

In one embodiment, the step of transmitting the message comprises encoding an indication in an uplink channel. Accordingly, the message may be encoded in an existing uplink channel.

In one embodiment, the message indicating which radio link is out of synchronization is a level 1 message transmitted on HS-DPCCH.

In one embodiment, the message indicating which radio link has suffered from a radio link failure is encoded in an RRC message.

In one embodiment, the method comprises the step of: receiving one set of parameters used to determine at least one of the synchronisation condition and the radio link failure condition for the serving cell and another set of parameters used to determine at least one of the synchronisation condition and the radio link failure condition for the assisting serving cell. Accordingly, different parameters may be utilised to determine the synchronization and radio link failure conditions for the serving cell and the assisting serving cells. For example, parameters may be utilised that allow a faster indication of a radio link failure or an out-of-synchronization condition to enable ameliorative action to be taken more quickly for one radio link than for others.

According to a second aspect, there is provided user equipment comprising: reception logic operable to receive a serving cell radio link and at least one assisting serving cell radio link transmitted on a shared frequency; determination logic operable to determine whether an out of synchronisation condition is met for each of the serving cell radio link and the at least one assisting serving cell radio link and, when it is determined that at least one of the out of synchronisation conditions are met, to provide an indication of which of the serving cell radio link and the at least one assisting serving cell radio link is out of synchronisation.

In one embodiment, the determination logic is operable to transmit a primitive indicating a synchronisation state for each of the serving cell radio link and the at least one assisting serving cell radio link.

In one embodiment, the determination logic is operable to transmit a primitive for each of the serving cell radio link and the at least one assisting serving cell radio link, each primitive indicating an associated one of a synchronised and out of synchronisation condition for that radio link.

In one embodiment, the determination logic is operable, when it is determined that the out of synchronisation condition is met, to transmit a message to at least one of the serving cell and the at least one assisting serving cell indicating which radio link is in the out of synchronisation condition.

In one embodiment, the determination logic is operable, when it is determined that the out of synchronisation condition is met, to determine whether a radio link failure condition for that radio link has been met and, if so, to transmit a primitive indicating which of the serving cell radio link and the at least one assisting serving cell radio link has exhibited the radio link failure condition.

In one embodiment, the primitive is transmitted between a physical layer and an upper layer.

In one embodiment, the determination logic is operable, when it is determined that the radio link failure condition is met, to transmit a message to at least one of the serving cell and the at least one assisting serving cell indicating which radio link has exhibited the radio link failure condition.

In one embodiment, the determination logic operable to transmit the message by encoding an indication in an uplink channel.

In one embodiment, the message indicating which radio link is out of synchronization is a level 1 message transmitted on HS-DPCCH.

In one embodiment, the message indicating which radio link has suffered from a radio link failure is encoded in an RRC message.

In one embodiment, the reception logic is operable to receive one set of parameters used to determine at least one of the synchronisation condition and the radio link failure condition for the serving cell and another set of parameters used to determine at least one of the synchronisation condition and the radio link failure condition for the assisting serving cell.

According to a third aspect, there is provided a network node method, comprising the steps of: receiving an indication from user equipment of which one of the serving cell radio link and the at least one assisting serving cell radio link is at least one of out of synchronisation and has exhibited a radio link failure condition; and informing affected network nodes that one of the serving cell radio link and the at least one assisting serving cell radio link is at least one of out of synchronisation and has exhibited the radio link failure condition.

In one embodiment, the method comprises the step of causing a signalling radio bearer to be transmitted on an unaffected radio link. Accordingly, one of the radio links which is not out of synchronization or which has not suffered a radio link failure may be utilized to transmit the signalling radio bearer. This helps to ensure that vital control information is received by the user equipment.

In one embodiment, the method comprises the step of causing a multiflow transmission of the signalling radio bearer on the serving cell radio link and the at least one assisting serving cell radio link. Accordingly, the signalling radio bearer may be transmitted on more than one radio link to help ensure that it is received by the user equipment.

In one embodiment, the method comprises the step of transmitting one set of parameters used to determine at least one of the synchronisation condition and the radio link failure condition for the serving cell and another set of parameters used to determine at least one of the synchronisation condition and the radio link failure condition for the assisting serving cell.

According to a fourth aspect, there is provided a network node comprising: reception logic operable to receive an indication from user equipment of which one of the serving cell radio link and the at least one assisting serving cell radio link is at least one of out of synchronisation and has exhibited a radio link failure condition; and informing logic operable to inform affected network nodes that one of the serving cell radio link and the at least one assisting serving cell radio link is at least one of out of synchronisation and has exhibited the radio link failure condition.

In one embodiment, the informing logic is operable to cause a signalling radio bearer to be transmitted on an unaffected radio link.

In one embodiment, the informing logic is operable to cause a multiflow transmission of the signalling radio bearer on the serving cell radio link and the at least one assisting serving cell radio link.

In one embodiment, the network node comprises transmission logic operable to transmit one set of parameters used to determine at least one of the synchronisation condition and the radio link failure condition for the serving cell and another set of parameters used to determine at least one of the synchronisation condition and the radio link failure condition for the assisting serving cell.

According to a fifth aspect, there is provided a computer program product operable, when executed on a computer, to perform the method steps of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the arrangement of user equipment operating in multi-flow HSDPA with two cells belonging to two different base stations;
Figure 2 illustrates the generation of primitives;
Figure A₁ illustrates an existing radio link failure evaluation technique;
Figure A₂ illustrates radio link failure based on joint level 1 out of synchronisation evaluation;
Figure A₃ illustrates independent radio link failure evaluation for DC-HSUPA; and
Figure A₄ illustrates independent and joint radio link failure evaluation for MF-HSDPA.

### DESCRIPTION OF THE EMBODIMENTS

### Overview

Before discussing the embodiments in any more detail, first an overview will be provided. Embodiments indicate an out-of-sync or a possible radio link failure to cells. This differs to prior approaches where, when user equipment detected that a radio link was out of sync, it simply shut it off its transmission. In those circumstance, the base station detecting the absence of a transmission from the user equipment determined that its radio link was out of sync. However, this prior approach is not reliable as it has since been agreed that transmissions should continue on the uplink if only one of the radio links is out of sync and it is no longer possible to use this approach to indicate that a radio link is out of sync.

A benefit of indicating an out-of-sync condition or possible radio link failure, particularly to the target cell, is that it enables the network to either switch the Signalling Radio Bearer (SRB) signalling to the unaffected cell or to perform bicasting of the SRB (for example, by sending the SRB using both the serving and assisting serving cells). It will be appreciated that the SRB contains essential control signals without which the operation of the user equipment may become unstable.

A new primitive may be used to indicate an out-of-sync condition for a radio link. For example, CPHY-out-of-sync-IND-X indicates that radio link X (which shares the same frequency as other downlink radio links) is out of sync. This should be compared to prior approaches where there is only one out-of-sync indication for each frequency carrier, rather than each radio link (for example, one for the serving cell and, in the case of DC-HSUPA, another for the secondary serving cell). However, embodiments provide an arrangement where there is one such new primitive for each radio link, such as one for the serving cell and another for each assisting serving cell. Embodiments indicate the cause of the out-of-sync radio link.

Similar rules to evaluate for out-of-sync may be applied as used in prior approaches. At the RRC layer, the user equipment can apply similar rules to determine radio link failure, but may use different values such as those which allow faster indication for radio link failure to enable switching of the SRB transmissions. When the radio link failure rule is met, the user equipment sends a message to the base stations indicating that link X has radio link failure.

The user equipment may evaluate for a radio link failure at the physical layer for each radio link. This means that the radio link failure evaluation functionality previously within the RRC layer is moved to the physical layer. The user equipment then sends an indication (for example, a new primitive) to the RRC layer to indicate that radio link failure has occurred for cell X. This avoids having to send multiple primitives to the RRC layer and, instead, a primitive is only sent when radio link failure has occurred in a specific cell.

The user equipment may continue to keep track of the quality of F-DPCH from each radio link. If one radio link F-DPCH quality falls below a threshold for a particular time period, the user equipment sends a specific code word to the network indicating that an out-of-sync condition has occurred, or that radio link failure has occurred. For example, the user equipment can set the ACK-NACK for the radio link as DTX and encode a specific CQI value (for example, o).

### Primitive Generation

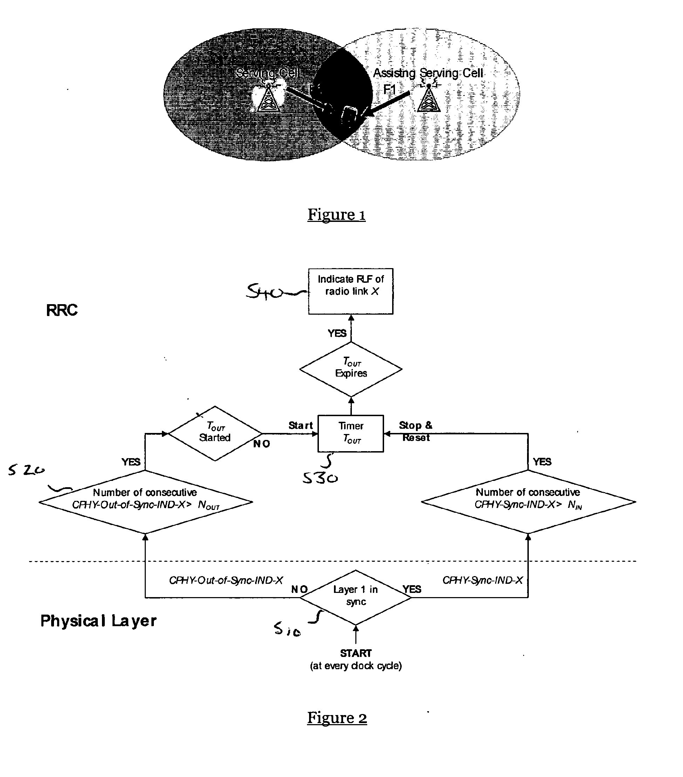

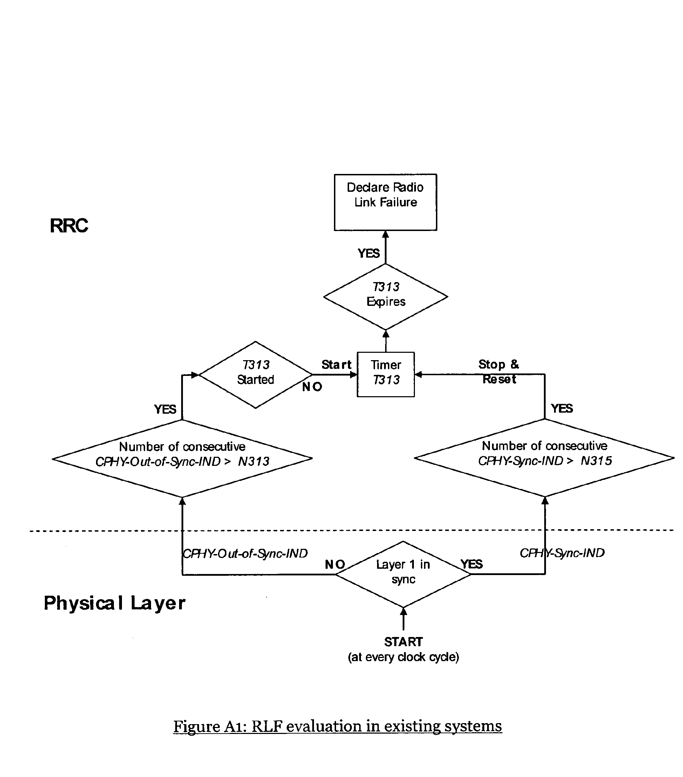

Figure 1 illustrates the arrangement of user equipment operating in multi-flow HSDPA with two cells belonging to two different base stations. Both cells provide radio links on the same frequency F1. The user equipment may optionally generate the CPHY-out-of-sync-IND and CPHY-sync-IND primitives mentioned above. In addition to these primitives, the user equipment also provides the following primitives: CPHY-out-of-sync-IND-serving to indicate to the RRC layer that the downlink radio link of the serving cell is out of sync;
CPHY-out-of-sync-IND-assisting to indicate to the RRC layer that the downlink radio link of the assisting serving cell is out of sync;
CPHY-sync-IND-serving to indicate to the RRC layer that the downlink radio link of the serving cell is in synchronization; and
CPHY-sync-IND-assisting to indicate to the RRC layer that the downlink radio link of the assisting serving cell is in synchronization.

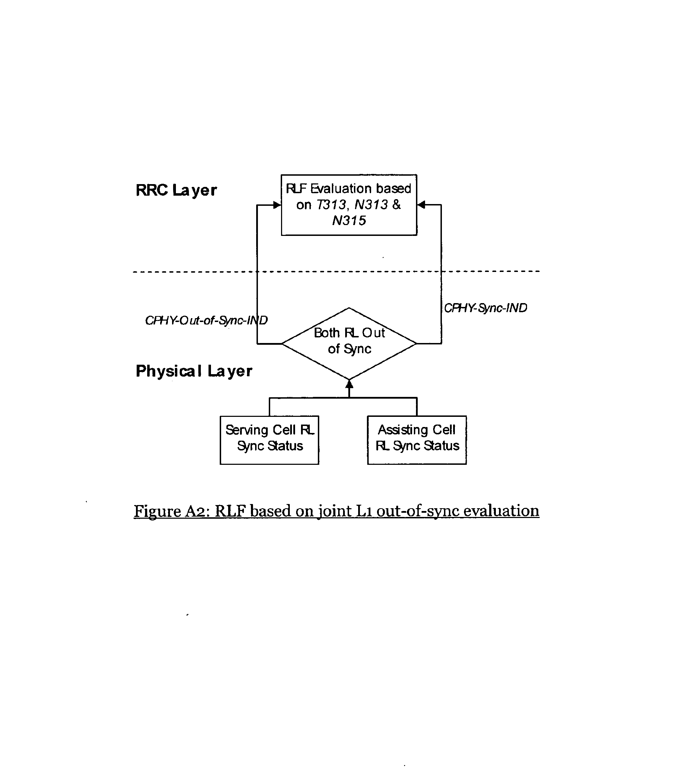

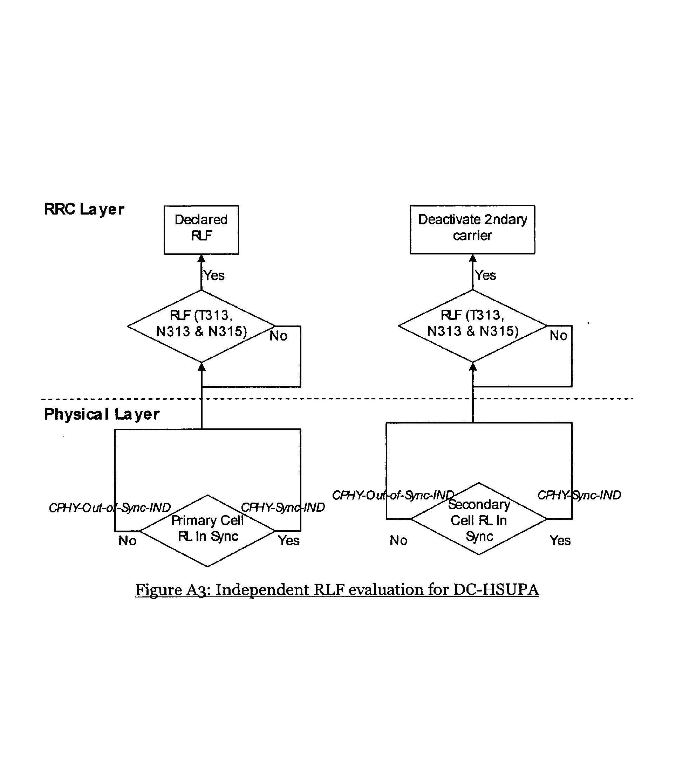

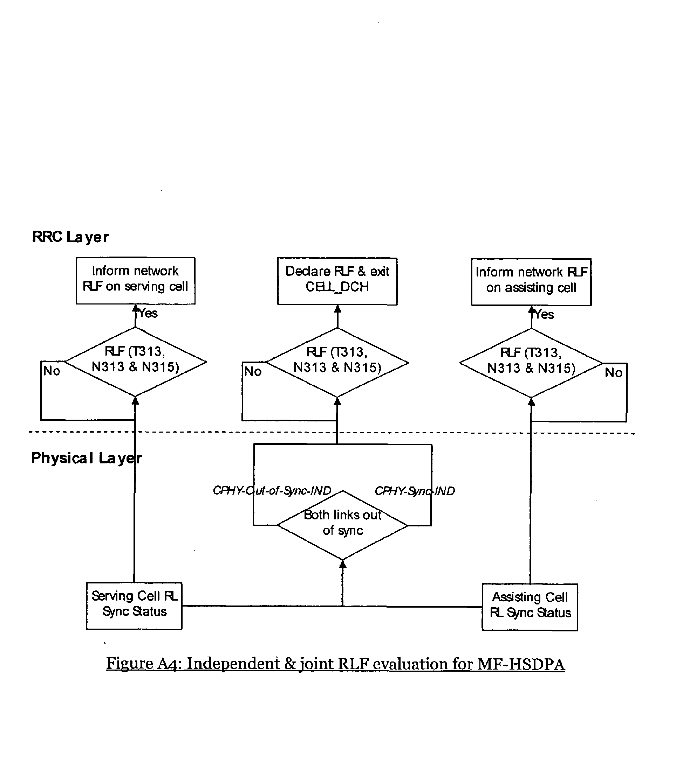

The generation and use of these primitives are shown in Figure 2 where X refers to either the serving cell or the assisting serving cells. The parameters N_{OUT}, N_{IN} and T_{OUT} can be signalled by the network to the user equipment and may differ for the serving cell and the assisting serving cells.

At step S₁₀, the user equipment assesses the quality of the F-DPCH using existing techniques and determines whether the link is out of sync (for example, existing techniques using the quality threshold may be used). If a radio link is determined to be out of sync, the user equipment sends a CPHY-out-of-sync-IND-X to the RRC layer, where X is "serving" if the serving cell is out of sync, and X is "assisting" if an assisting serving cell is out of sync.

At step S₂₀, at the RRC layer, if the number of consecutive CPHY-out-of-sync-IND-X is greater than N_{OUT}, then at step S₃₀ the timer T_{OUT} is started. The timer T_{OUT} is stopped and reset if the RRC layer receives N_{IN} consecutive CPHY-sync-IND-X.

At step S₄₀, once T_{OUT} expires, the user equipment sends an RRC message to the network indicating the downlink radio link failure for cell X.

Accordingly, it can be seen that it is determined whether an out-of-synchronization condition is met for each radio link and, when any of the radio links are out of synchronization, an indication is provided.

It will be appreciated that as well as transmitting an indication of a radio link failure to the base stations, an indication may be provided to those base stations that a radio link is out of synchronization. The indication may be transmitted in a level 1 message in HS-DPCCH for the out-of-sync condition and may be encoded in an RRC message for radio link failure.

### Status Signalling

Again, considering the arrangement shown in Figure 1, the user equipment monitors the radio link from the serving cell and the assisting serving cell. When the F-DPCH quality of a radio link for cell X (either serving or assisting, or both) falls below a threshold Q_{OUT-X} for Tx ms, that link is considered to be out of sync. The value of Q_{OUT-X} and Tx can be signalled or may be specified. In addition, different thresholds may be used for the serving and assisting cells; for example, Q_{OUT-SERVING} and Q_{OUT-ASSISTING}. Similarly, different timers may be used for the serving and assisting cell determination, respectively; for example, T_{SERVING} and T_{ASSISTING}.

Consider the situation where the radio link for the serving cell is out of sync. In the uplink feedback channel (HS-DPCCH), the user equipment sends a code word (a predetermined value; for example, the serving cell acknowledgement may be set to DTX and the CQI value may be set to o, as shown in Table 1 below).

**Table 1 - Example Encoding**

| **Acknowledgement** | | **CQI** | |
|---|---|---|---|
| **Serving Cell** | **Assisting Cell** | **Serving Cell** | **Assisting Cell** |
| DTX | ACK/NACK | 0 | As per measured |

This gives an indication that the serving cell is out of sync. It will be appreciated that any suitable code word or combination of values may be used to indicate an out-of-synchronization condition.

If the out-of-synchronization condition persists, then the user equipment can further send an RRC message to the network to indicate a possible radio link failure on the serving cell.

### Network Action

The network may take corrective action when it determines that an out-of-sync or radio link failure has occurred. Situations may arise where the network node which is subject to the radio link failure is unable to receive the indication that its radio link is either out of synchronization or has failed. In those circumstances, a network node (such as an unaffected base station) which receives the out-of-sync or radio link failure may signal to the network the state of that radio link in order that the network may inform the affected base station.

The network may also cause the signalling radio bearer to be transmitted on an unaffected radio link, or may even cause multi-flow transmission of the signalling radio link bearer.

The network may also determine the parameters used by the user equipment to determine the out-of-synchronization condition and the radio link failure condition and transmit these to the user equipment. Furthermore, the network may utilize different condition parameters for the serving cell and the assisting serving cells.

Accordingly, it can be seen that this approach enables the user equipment to indicate an out-of-sync condition and radio link failure of a specific radio link when multiple radio links of the same frequency are utilised (for example, in multi-flow HSDPA). Previously, it was not possible to provide such an indication of an individual radio link in multi-flow HSDPA.

As mentioned above, in existing systems when a downlink radio link is out of sync, the user equipment (UE) physical layer sends a CPHY-Out-of-Sync-IND primitive to the higher layer. The UE stops transmitting when it is out of sync. If the higher layer consistently receives these out-of-sync primitives, it will declare Radio Link Failure (RLF) to the nodeB (NB) and the UE will exit CELL_DCH. The criteria for RLF is based on the timer T₃₁₃, number of CPHY-Out-of-Sync-IND threshold N₃₁₃ and number of CPHY-Sync-IND threshold N₃₁₅ as shown in Figure A1.

In multiflow transmission, it is possible that a UE receives two radio links of the same frequency carrier. These radio links come from difference cells and therefore they would experience different radio propagation conditions thereby giving an inherent redundancy in the downlink radio link. It is proposed to make use of these multiple downlink radio links to improve the robustness of the MF-HSDPA operation. Here, the UE only sends the CPHY-Out-of-Sync-IND primitive to higher layer if the downlink radio link from the serving and assisting serving cells are both out-of-sync rather than sending the primitive whenever any of them is out of sync. RLF is evaluated at the higher layer using the existing method based on *T₃₁₃, N₃₁₃* and *N₃₁₅* as in Figure A1. In this way, RLF is only declared by the UE if both radio links fail as shown in Figure A₂, thereby improving the robustness of MF-HSDPA transmission.

In DC-HSUPA, the out-of-sync of the downlink radio link is evaluated independently for the downlink primary carrier and downlink secondary carrier. The UE also evaluates for RLF on each downlink carrier as shown in Figure A₃ and if the secondary carrier experiences RLF, it will deactivate the secondary carrier as if a HS-SCCH order has been received. RLF is not declared to the network since the UE would stop transmission on the uplink secondary carrier and the network detection of the absence of this uplink transmission for a prolonged period would implicitly indicate a RLF. Deactivating the secondary carrier allows the UE to conserve battery power in decoding downlink transmission.

In contrast to DC-HSUPA, in MF-HSDPA, the out-of-sync is jointly determined. Hence, if one of the radio links is out of sync and experiences RLF (as if determined in the existing manner), it is difficult for the network to detect this since the UE continues to perform uplink transmission. Also as long as one of the radio links is in sync, the UE would continue to demodulate the radio link that is out-of-sync instead of deactivating it as in DC-HSUPA. Therefore it is beneficial that the higher layer at the UE is aware of the synchronisation status of each downlink radio link. To maintain the robustness advantage of MF-HSDPA the RLF in MF-HSDPA is still evaluated based on the joint out-of-sync indication or reuses the existing out-of-sync indication (i.e. separate CPHY-Out-of-Sync-IND primitive for each radio link) but evaluates RLF at higher layer based on out-of-sync indications from both radio links. This is shown in Figure A₄.

Accordingly, for MF-HSDPA operation, a higher layer at the UE should be aware of the synchronisation status of each downlink radio link

Also, the RLF in MF-HSDPA can still be evaluated based on the joint out-of-sync indication or reuse existing out-of-sync indication, but evaluates RLF at higher layer based on out-of-sync indications from both radio links.

The improvement to the robustness of the radio link is subjected to whether SRB can be transmitted via both the serving cell and assisting serving cell. If SRB transmission can be switched from serving cell to assisting serving cell then it is beneficial that the network is aware that one of the downlink radio links has RLF. Unlike DC-HSUPA, the UE in MF-HSDPA continues transmitting in the uplink rather than turning off its transmitter when one of the links is out-of-sync. It is therefore difficult for the network to know whether a link is RLF in MF-HSDPA. Hence, it is beneficial that the UE informs the network explicitly or implicitly of a RLF in one of the downlink radio links.

Accordingly, the UE informs the network if one of the radio links experiences RLF.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method, comprising:
receiving a serving cell radio link and at least one assisting serving cell radio link transmitted on a shared frequency;
determining whether an out of synchronisation condition is met for each of said serving cell radio link and said at least one assisting serving cell radio link; and
when it is determined that at least one of said out of synchronisation conditions are met, providing an indication of which of said serving cell radio link and said at least one assisting serving cell radio link is out of synchronisation.

2. The method of claim 1, wherein said step of providing comprises transmitting a primitive indicating a synchronisation state for each of said serving cell radio link and said at least one assisting serving cell radio link.

3. The method of claim 1 or 2, wherein said step of providing comprises transmitting a primitive for each of said serving cell radio link and said at least one assisting serving cell radio link, each primitive indicating an associated one of a synchronised and out of synchronisation condition for that radio link.

4. The method of any preceding claim, comprising the step of:
when it is determined that said out of synchronisation condition is met, transmitting a message to at least one of said serving cell and said at least one assisting serving cell indicating which radio link is in said out of synchronisation condition.

5. The method of any preceding claim, comprising the step of:
when it is determined that said out of synchronisation condition is met, determining whether a radio link failure condition for that radio link has been met and, if so, transmitting a primitive indicating which of said serving cell radio link and said at least one assisting serving cell radio link has exhibited said radio link failure condition.

6. The method of any preceding claim, wherein said primitive is transmitted between a physical layer and an upper layer.

7. The method of any preceding claim, comprising the step of:
when it is determined that said radio link failure condition is met, transmitting a message to at least one of said serving cell and said at least one assisting serving cell indicating which radio link has exhibited said radio link failure condition.

8. The method of any preceding claim, wherein said step of transmitting said message comprises encoding an indication in an uplink channel.

9. The method of any preceding claim, comprising the step of:
receiving one set of parameters used to determine at least one of said synchronisation condition and said radio link failure condition for said serving cell and another set of parameters used to determine at least one of said synchronisation condition and said radio link failure condition for said assisting serving cell.

10. User equipment comprising:
reception logic operable to receive a serving cell radio link and at least one assisting serving cell radio link transmitted on a shared frequency;
determination logic operable to determine whether an out of synchronisation condition is met for each of said serving cell radio link and said at least one assisting serving cell radio link and, when it is determined that at least one of said out of synchronisation conditions are met, to provide an indication of which of said serving cell radio link and said at least one assisting serving cell radio link is out of synchronisation.

11. A network node method, comprising the steps of:
receiving an indication from user equipment of which one of said serving cell radio link and said at least one assisting serving cell radio link is at least one of out of synchronisation and has exhibited a radio link failure condition; and
informing affected network nodes that one of said serving cell radio link and said at least one assisting serving cell radio link is at least one of out of synchronisation and has exhibited said radio link failure condition.

12. The method of claim 11, comprising the step of causing a signalling radio bearer to be transmitted on an unaffected radio link.

13. The method of claim 11 or 12, comprising the step of causing a multiflow transmission of said signalling radio bearer on said serving cell radio link and said at least one assisting serving cell radio link.

14. The method of any one of claims 11 to 13, comprising the step of transmitting one set of parameters used to determine at least one of said synchronisation condition and said radio link failure condition for said serving cell and another set of parameters used to determine at least one of said synchronisation condition and said radio link failure condition for said assisting serving cell.

15. A network node comprising:
reception logic operable to receive an indication from user equipment of which one of said serving cell radio link and said at least one assisting serving cell radio link is at least one of out of synchronisation and has exhibited a radio link failure condition; and
informing logic operable to inform affected network nodes that one of said serving cell radio link and said at least one assisting serving cell radio link is at least one of out of synchronisation and has exhibited said radio link failure condition.

## Amended claims

### Amended claims in accordance with Rule 137(2) EPC.

**1.** A user equipment method, comprising:
receiving a serving cell radio link and at least one assisting serving cell radio link transmitted on a shared frequency;
determining whether an out of synchronisation condition is met for each of said serving cell radio link and said at least one assisting serving cell radio link; and
when it is determined that at least one of said out of synchronisation conditions are met,
providing an indication of which of said serving cell radio link and said at least one assisting serving cell radio link is out of synchronisation by transmitting a primitive for each of said serving cell radio link and said at least one assisting serving cell radio link, each primitive indicating an associated one of a synchronised and out of synchronisation condition for that radio link.

**2.** The method of any preceding claim, comprising the step of:
when it is determined that said out of synchronisation condition is met, transmitting a message to at least one of said serving cell and said at least one assisting serving cell indicating which radio link is in said out of synchronisation condition.

**3.** The method of any preceding claim, comprising the step of:
when it is determined that said out of synchronisation condition is met, determining whether a radio link failure condition for that radio link has been met and, if so, transmitting a primitive indicating which of said serving cell radio link and said at least one assisting serving cell radio link has exhibited said radio link failure condition.

**4.** The method of any preceding claim, wherein said primitive is transmitted between a physical layer and an upper layer.

**5.** The method of any preceding claim, comprising the step of:
when it is determined that said radio link failure condition is met, transmitting a message to at least one of said serving cell and said at least one assisting serving cell indicating which radio link has exhibited said radio link failure condition.

**6.** The method of any preceding claim, wherein said step of transmitting said message comprises encoding an indication in an uplink channel.

**7.** The method of any preceding claim, comprising the step of:
receiving one set of parameters used to determine at least one of said synchronisation condition and said radio link failure condition for said serving cell and another set of parameters used to determine at least one of said synchronisation condition and said radio link failure condition for said assisting serving cell.

**8.** User equipment comprising:
reception logic operable to receive a serving cell radio link and at least one assisting serving cell radio link transmitted on a shared frequency;
determination logic operable to determine whether an out of synchronisation condition is met for each of said serving cell radio link and said at least one assisting serving cell radio link and, when it is determined that at least one of said out of synchronisation conditions are met, to provide an indication of which of said serving cell radio link and said at least one assisting serving cell radio link is out of synchronisation by transmitting a primitive for each of said serving cell radio link and said at least one assisting serving cell radio link, each primitive indicating an associated one of a synchronised and out of synchronisation condition for that radio link.

**9.** A network node method, comprising the steps of:
receiving primitives from user equipment for each of said serving cell radio link and said at least one assisting serving cell radio link, a primitive being received for each radio link indicating either a synchronised or out of synchronisation condition for that radio link;
at least one of said primitives indicating that one of said serving cell radio link and said at least one assisting serving radio cell link is at least one of out of synchronisation and has exhibited a radio link failure condition; and
informing affected network nodes that said one of: said serving cell radio link and said at least one assisting serving cell radio link is said at least one of out of synchronisation and has exhibited said radio link failure condition.

**10.** The method of claim 9, comprising the step of causing a signalling radio bearer to be transmitted on an unaffected radio link.

**11.** The method of claim 9 or 10, comprising the step of causing a multiflow transmission of said signalling radio bearer on said serving cell radio link and said at least one assisting serving cell radio link.

**12.** The method of any one of claims 9 to 11, comprising the step of transmitting one set of parameters used to determine at least one of said synchronisation condition and said radio link failure condition for said serving cell and another set of parameters used to determine at least one of said synchronisation condition and said radio link failure condition for said assisting serving cell.

**13.** A network node comprising:
reception logic operable to receive primitives from user equipment for each of said serving cell radio link and said at least one assisting serving cell radio link, a primitive being received for each radio link indicating either a synchronised or out of synchronisation condition for that radio link;
at least one of said primitives indicating that one of said serving cell radio link and said at least one assisting serving radio cell link is at least one of out of synchronisation and has exhibited a radio link failure condition; and
informing logic operable to inform affected network nodes that said one of said serving cell radio link and said at least one assisting serving cell radio link is said at least one of out of synchronisation and has exhibited said radio link failure condition.

**14.** A computer program product comprising a computer program operable when executed on a computer to perform the method of any one of claims 1 to 7 or 9 to 12.

**15.** A computer program operable when executed on a computer to perform the method of any one of claims 1 to 7 or 9 to 12.
